# EUROPÄISCHE PATENTSCHRIFT

(11) **EP 3 132 620 B1**
(45) Veröffentlichungstag und Bekanntmachung des Hinweises auf die Patenterteilung: **08.01.2025**
(21) Anmeldenummer: 15714827.1
(22) Anmeldetag: 09.04.2015
(51) Int. Cl.: H04L 69/18, H04W 4/029, H04W 4/40, H04W 84/18

(54) **CAR2X-KOMMUNIKATION IN USA UND EUROPA MIT EINHEITLICHEM TRANSMITTER**
CAR2X COMMUNICATION IN THE USA AND EUROPE USING A UNIFORM TRANSMITTER
COMMUNICATION CAR2X AUX ÉTATS-UNIS D'AMÉRIQUE ET EN EUROPE AVEC UN ÉMETTEUR UNIFORME

(30) Priorität: 14.04.2014 DE 102014207093; 18.12.2014 DE 102014018672
(43) Veröffentlichungstag der Anmeldung: 22.02.2017
(73) Patentinhaber: Continental Automotive Technologies GmbH, 30175 Hannover (DE)
(72) Erfinder: KRETSCHMAR, Sven, 65462 Gustavsburg (DE); MARTIN, Torsten, 61449 Steinbach/Taunus (DE); BAUCH, Nils, 65510 Idstein (DE); MENZEL, Marc, 35096 Weimar (Lahn) (DE); GEIB, Horst, 55435 Gau-Algesheim (DE)
(74) Vertreter: Continental Corporation
(86) Internationale Anmeldenummer: PCT/EP2015/057668
(87) Internationale Veröffentlichungsnummer: WO 2015/158591

(56) Entgegenhaltungen:
- EP-A2- 2 663 101
- DE-A1- 10 137 138
- ANONYMOUS: "Kommunikationsprotokoll - Wikipedia", 1 September 2013 (2013-09-01), XP093113953, Retrieved from the Internet <URL:https://de.wikipedia.org/w/index.php?title=Kommunikationsprotokoll&oldid=122139064> [retrieved on 20231220]
- KONSTANTINOS DEMESTICHAS ET AL: "Intelligent Advanced Driver Assistance System for Electric Vehicles", INTELLIGENT VEHICLES SYMPOSIUM (IV), 2011 IEEE, IEEE, 5 June 2011 (2011-06-05), pages 78 - 82, XP031998919, ISBN: 978-1-4577-0890-9, DOI: 10.1109/IVS.2011.5940409
- GEORGIOS KARAGIANNIS ET AL: "Vehicular Networking: A Survey and Tutorial on Requirements, Architectures, Challenges, Standards and Solutions", IEEE COMMUNICATIONS SURVEYS, IEEE, NEW YORK, NY, US, vol. 13, no. 4, 1 October 2011 (2011-10-01), pages 584 - 616, XP011387780, ISSN: 1553-877X, DOI: 10.1109/SURV.2011.061411.00019

## Beschreibung

Die Erfindung betrifft ein Verfahren zum Bereitstellen von Daten, die mit einem Fahrzeug in einem Fahrzeug-Ad-hoc-Netzwerk, in dem die Daten mit einem ortsabhängigen Kommunikationsprotokoll zwischen am Fahrzeug-Ad-hoc-Netzwerk teilnehmenden Netzwerkteilnehmern übertragen werden, eine Steuervorrichtung zur Durchführung des Verfahrens und ein Fahrzeug mit der Steuervorrichtung.

Aus der WO 2010 / 139 526 A1 ist ein Car2X genanntes mobiles Ad-hoc-Netz bekannt, dessen Knoten bestimmte Straßenverkehrsteilnehmer wie Fahrzeuge oder andere Objekte im Straßenverkehr, wie Ampeln sind. Über diese Netzwerke können den am Car2X-Netzwerk beteiligten Straßenverkehrsteilnehmern Hinweise über Straßenverkehrszustände, wie Unfälle, Staus, Gefahrensituationen, ... bereitgestellt werden, die mit reiner Umfeldsensorik nur sehr zeitkritisch erfassbar sind. Den am Car2X-Netzwerk beteiligten Straßenverkehrsteilnehmern verbleibt damit im Falle ungünstiger oder verkehrsgefährdender Straßenverkehrszustände in der Regel mehr Zeit darauf zu reagieren.

Das Dokument KONSTANTINOS DEMESTICHAS ET AL: "Intelligent Advanced Driver Assistance System for Electric Vehicles", INTELLIGENT VEHICLES SYMPOSIUM (IV), 2011 IEEE, IEEE, 5. Juni 2011 (2011-06-05), Seiten 78-82, XP031998919, DOI: 10.1109/IVS. 2011.5940409 ISBN: 978-1-4577-0890-9 beschreibt Verfahren zum Bereitstellen von Daten, die mit einem Fahrzeug in einem Fahrzeug-Ad-hoc-Netzwerk, in dem die Daten mit einem Kommunikationsprotokoll zwischen am Fahrzeug-Ad-hoc-Netzwerk teilnehmenden Netzwerkteilnehmern übertragen werden, empfangbar sind. Diesbezüglich wird auch Bezug auf eine ITS Kommunikationsarchitektur zur Kommunikation mittels unterschiedlicher Kommunikationsmedien und Netzwerkprotokolle zur Unterstützung einer simultanen Verwendung mehrerer Applikationen und Kommunikationszugriffstechnologien genommen.

Die Offenlegungsschrift EP 2 663 101 A2 offenbart ein System und ein Verfahren zur Verwendung von Funktechnik zur Bestimmung der Betriebsparameter, die von einem Endgerät verwendet werden. Dabei bestimmt das Endgerät, ob ermittelte Standortinformationen eine bestimmte Region wie ein Land bezeichnen und verwendet die für die bestimmte Region entsprechenden Übertragungskanäle und Leistungsstufen.

Die Offenlegungsschrift DE 10 137 138 A1 bezieht sich auf ein mobiles Zwischenfahrzeug-Kommunikationssystem, welches eine große Anzahl von Fahrzeugen mit Codes versorgt. CDMA-Systeme benutzen verschiedene Codes, um Störungen zwischen Sendern zu vermeiden. Die Zuweisung von Kommunikationskanälen erfolgt dezentral, sodass jeder Sender seinen Kanal ohne Störungen verwenden kann. Die Zuweisung der Kommunikationskanäle erfolgt ortsabhängig, hierzu wird das relevante geographische Gebiet in eine Vielzahl von Zellen unterteilt.

Es ist Aufgabe die Nutzung die Car2X-Kommunikation zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung umfasst ein Verfahren zum Bereitstellen von Daten, die mit einem Fahrzeug in einem Fahrzeug-Ad-hoc-Netzwerk, in dem die Daten mit einem ortsabhängigen Kommunikationsprotokoll zur Entschlüsselung eines empfangenen Datenstroms und Ausgabe eines protokollspezifischen Nutzdatenstroms zwischen am Fahrzeug-Ad-hoc-Netzwerk teilnehmenden Netzwerkteilnehmern übertragen werden, empfangbar sind, wobei mittels einer Recheneinrichtung die Schritte ausgeführt werden:
- Identifizieren eines geographischen Aufenthaltsbereiches des Fahrzeuges,
- Auswählen eines für den identifizierten Aufenthaltsbereich geeigneten Kommunikationsprotokolls, und
- Empfangen der Daten mit dem ausgewählten Kommunikationsprotoll, so dass die empfangenen Daten wenigstens einer über dem ausgewählten Kommunikationsprotokoll liegenden Netzwerkschicht zur Verfügung stehen.

Dem angegebenen Verfahren liegt die Überlegung zugrunde, dass die Daten in einem Fahrzeug-Ad-hoc-Netzwerk, wie dem eingangs genannten Car2X-Netzwerk mit einem bestimmten Kommunikationsprotokoll übertragen werden müssen. Derartige Kommunikationsprotokolle werden jedoch länderspezifisch unter anderem im Rahmen der ETSI TC ITS bei ETSI in Europa und im Rahmen der IEEE 1609 bei IEEE sowie bei SAE in den Vereinigten Staaten von Amerika standardisiert. Damit sind die Kommunikationsprotokolle verwendende Netzwerk-Architekturen jeweils nur entweder für den europäischen oder den US-amerikanischen Markt ausgestaltet, wobei es ist auch nicht vorgesehen ist, beide Kommunikationsprotokolle zu vereinheitlichen. Allerdings wird im Rahmen des angegebenen Verfahrens erkannt, dass die mit den Kommunikationsprotokollen versendeten Nutzdaten ähnlich sind, so dass die Anwendungsschichten, die auf die in der ETSI TC ITS und in der IEEE 1609 definierten Kommunikationsprotokolle aufsetzen, gleich ausgebildet werden können. Beispiele hierfür sind die Funktionen "Green Ligth Optimal Speed Advisory" (GLOSA) oder "Emergency Vehicle Warning" (EVW). Mit anderen Worten sind die ausgetauschten Nutzdaten schlussendlich gleich. Es unterscheidet sich lediglich die Art der Datenübertragen, die vom jeweiligen Land abhängig ist, in dem sich das am Fahrzeug-Ad-hoc-Netzwerk teilnehmende Fahrzeug befindet.

Hier setzt das angegebene Verfahren mit dem Vorschlag an, vor dem Empfangen der eigentlichen Nutzdaten zunächst ein geeignetes Protokoll auszuwählen. Da dieses Protokoll vom Standort des Fahrzeuges und damit seinem geographischen Aufenthaltsbereich abhängig ist, wird im Rahmen des angegebenen Verfahrens vorgeschlagen, den Standort des Fahrzeuges und damit seinem geographischen Aufenthaltsbereich zu identifizieren und dann basierend auf dem identifizierten Standort ein dafür geeignetes Kommunikationsprotokoll auszuwählen. Auf diese Weise kann das Fahrzeug an jedem beliebigen Standort und damit in jedem beliebigen geographischen Aufenthaltsbereich Teilnehmer eines Fahrzeug-Ad-hoc-Netzwerkes sein, für den ein Kommunikationsprotokoll zur Verfügung steht und auswählbar ist.

Damit können verschiedene Markte mit einem einzigen System, und damit mit einer einzigen Kommunikationsarchitektur bedient werden, wodurch der Produktionsaufwand und damit die Herstellungskosten für die Kommunikationsarchitektur gesenkt werden können.

Hinsichtlich der oben genannten speziellen Kommunikationsprotokolle ETSI TC ITS und in der IEEE 1609 gibt es zwar auch Nutzdaten, die im jeweils anderen Kommunikationsprotokoll nicht vorgesehen sind, diese können jedoch in der gemeinsamen Kommunikationsarchitektur verworfen werden, wenn diese im identifizierten geographischen Aufenthaltsbereich nicht verwendbar sind. So werden die Nutzdaten "Blind Spot and Lane Change Warning" nicht in Europa und die Nutzdaten "Pre Chrash Airbag Support" nicht in den USA unterstützt. Eine Aufnahme dieser Nutzdaten in den jeweiligen Standard ist auch nicht geplant.

Entsprechend zum Empfang von Daten umfasst ein Verfahren zum Versenden von Daten über ein Fahrzeug-Ad-hoc-Netzwerk, in dem die Daten mit einem ortsabhängigen Kommunikationsprotokoll zur Entschlüsselung eines empfangenen Datenstroms und Ausgabe eines protokollspezifischen Nutzdatenstroms zwischen am Fahrzeug-Ad-hoc-Netzwerk teilnehmenden Netzwerkteilnehmern übertragen werden, mit einem Fahrzeug als Netzwerkteilnehmer, wobei gemäß einem weiteren Aspekt der Erfindung mittels einer Recheneinrichtung die Schritte ausgeführt werden:
- Identifizieren eines geographischen Aufenthaltsbereiches des Fahrzeuges,
- Auswählen eines für den identifizierten Aufenthaltsbereich geeigneten Kommunikationsprotokolls, und
- Abrufen von Daten aus wenigstens einer über dem ausgewählten Kommunikationsprotokoll liegenden Netzwerkschicht,
- Versenden der abgerufenen Daten mit dem ausgewählten Kommunikationsprotoll.

Auch mit diesem angegebenen Verfahren kann ein Fahrzeug in verschiedenen geographischen Regionen und damit in verschiedenen geographischen Aufenthaltsbereichen Teilnehmer eines Fahrzeug-Ad-hoc-Netzwerk mit einem standortabhängigen Kommunikationsprotokoll sein, wodurch auch hier eine einheitliche Kommunikationsarchitektur bereitgestellt werden kann.

Das identifizieren des geographischen Aufenthaltsbereiches kann in verschiedene Schritte untergliedert sein. Zweckmäßigerweise sollte das angegebene Verfahren jedoch in einer Weiterbildung zum Identifizieren des geographischen Aufenthaltsbereiches des Fahrzeuges den geographischen Aufenthaltsbereich erkennen. Dies kann in an sich beliebiger Weise erfolgen. Beispielsweise könnten die bereits vorhandenen Kommunikationsprotokolle so erweitert werden, dass allein aus dem Empfangen von mit den Kommunikationsprotokollen versendeten Daten der geographische Aufenthaltsbereich hervorgeht. Fraglich ist, ob dies jedoch so umgesetzt wird. Auch könnte versucht werden anhand der Struktur der mit dem Kommunikationsprotokoll versendeten Daten auf den geographischen Aufenthaltsbereich zu schließen. So werden beispielsweise im Kommunikationsprotokoll des IEEE 1609.4 die zu versendenden Daten auf dem Kanal 178, dem Control Channel, per channel switching übertragen. Das channel switching fällt dadurch auf das nach jeweils 50ms hoher Kanallast (viele Botschaften, hoher Rauschpegel, hoher Energiepegel) 50ms niedrige Kanallast herrscht. Je nach Ausstattung der das angegebene Verfahren ausführenden Vorrichtung können eine oder mehrere der erwähnten Parameter gemessen werden. Wird das channel switching entdeckt, befindet sich das Fahrzeug mit hoher Wahrscheinlichkeit in der geographischen Region, die das Kommunikationsprotokoll des IEEE 1609.4 einsetzt, also in US-Amerika.

Eine Möglichkeit, die Erkennung des geographischen Aufenthaltsbereichs des Fahrzeuges unabhängig von der Ausgestaltung des Kommunikationsprotokolls zu gestalten ist, zu prüfen ob im Umfeld des Fahrzeuges bekannte Merkmale durch Messen, überwachen, etc. erfassbar sind, die auf einen vorbekannten geographischen Aufenthaltsbereich hindeuten.

Hierzu könnte beispielsweise in einer bevorzugten Weiterbildung des angegebenen Verfahrens als bekanntes Merkmal eine einem vorbestimmten geographischen Aufenthaltsbereich zuordenbare und über ein globales Satellitennavigationssystem empfangene geographische Position verwendet werden. Das heißt, dass im Rahmen der angegebenen Weiterbildung zunächst mit dem globalen Satellitennavigationssystem der aktuelle Standort des Fahrzeuges erfasst und dann in einer Datenbank nachgesehen wird, ob der erfasste Standort bekannt ist, oder zumindest ob zu dem erfassten Standort ein Kommunikationsprotoll zur Verfügung steht. Globale Satellitennavigationssignale kann beispielsweise ein Global Positioning System-Signal, kurz GPS-Signal, ein 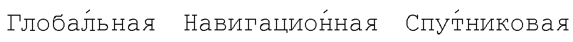 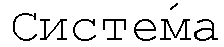 Signal, kurz GLONASS-Signal oder ein Galileo-Signal sein.

Um Fehler bei der Identifikation des geographischen Aufenthaltes, die eventuell auch nur kurzfristig vorliegen können, zu reduzieren oder sogar zu vermeiden, können in einer anderen Weiterbildung des angegebenen Verfahrens zum Identifizieren des geographischen Aufenthaltsbereiches des Fahrzeuges der erkannte geographische Aufenthaltsbereich plausibilisiert werden.

Für diese Plausibilisierung können verschiedene Randbedingungen einzeln oder in einer beliebigen Kombination verwendet werden, denen das Fahrzeug ausgesetzt ist.

Zum einen könnte versucht werden, das Mobilfunksystem zu erkennen, das im aktuellen geographischen Aufenthaltsbereich des Fahrzeuges verwendet wird. Kann dieses erkannte Mobilfunksystem keinem Mobilfunksystem, das in dem erkannten geographischen Aufenthaltsbereich als verwendet bekannt ist, dann liegt bei der Erkennung des Aufenthaltsbereichs wahrscheinlich ein Fehler vor. Dabei können im Rahmen des zu erkennenden Mobilfunksystems sowohl der Funkstandart als auch der Mobilfunkprovider berücksichtigt werden, je nach den technischen Voraussetzungen des Systems, das das angegeben Verfahren ausführt.

Alternativ oder zusätzlich könnten ein zuvor abgespeicherter geographischer Aufenthaltsbereich, der schon einmal als richtig erkannt wurde, und der aktuell erkannte geographischen Aufenthaltsbereich miteinander verglichen werden. In den meisten Fällen ist es unwahrscheinlich, dass sich das Fahrzeug über Strecken (insbesondere zwischen den Kontinenten) bewegt, die so groß sind, dass sich das Kommunikationsprotokoll ändert.

Auch könnte die aktuelle Fahrzeugkonfiguration mit einer Fahrzeugkonfiguration verglichen werden, die gemäß dem erkannten geographischen Aufenthaltsbereich vorhanden sein müsste. Hier könnte beispielsweise das Fahrzeug-Maßsystem (metrisch oder zöllig) als Grundlage herangezogen werden, das auf dem Fahrzeugbus mitgeteilt wird.

Schließlich kann zum Plausibilisieren auch die bereits erläutere Struktur der mit dem Kommunikationsprotokoll versendeten Daten herangezogen werden.

Erfindungsgemäß umfasst das angegebene Verfahren den Schritt Konvertieren der zwischen dem ausgewählten Kommunikationsprotokoll und der über dem ausgewählten Kommunikationsprotokoll liegenden Netzwerkschicht übergebenen Daten. Liegt über dem Kommunikationsprotokoll beispielsweise die Anwendungsschicht, dann können Daten aus der Anwendungsschicht in das richtige Kommunikationsprotokoll vor dem Versenden und empfangene Daten aus dem Kommunikationsprotokoll in ein einheitliches Standartformat für die Anwendungsschicht konvertiert werden. Dies hat den Vorteil, dass die Anwendungsschicht einheitlich für alle Arten von Kommunikationsprotokollen ausgebildet werden kann, so dass sich Programmierer in der Anwendungsschicht keine Gedanken über das verwendete Kommunikationsprotokoll machen müssen.

Gemäß einem weiteren Aspekt der Erfindung ist eine Steuervorrichtung eingerichtet, ein Verfahren nach einem der vorstehenden Ansprüche durchzuführen.

In einer Weiterbildung der angegebenen Steuervorrichtung weist die angegebene Vorrichtung einen Speicher und einen Prozessor auf. Dabei ist das angegebene Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Gemäß einem weiteren Aspekt der Erfindung umfasst ein Computerprogramm Programmcodemittel, um alle Schritte eines der angegebenen Verfahren durchzuführen, wenn das Computerprogramm auf einem Computer oder einer der angegebenen Vorrichtungen ausgeführt wird.

Gemäß einem weiteren Aspekt der Erfindung enthält ein Computerprogrammprodukt einen Programmcode, der auf einem computerlesbaren Datenträger gespeichert ist und der, wenn er auf einer Datenverarbeitungseinrichtung ausgeführt wird, eines der angegebenen Verfahren durchführt.

Gemäß einem anderen Aspekt der Erfindung umfasst ein Fahrzeug eine angegebene Steuervorrichtung.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 eine Prinzipdarstellung eines auf einer Straße fahrenden Fahrzeuges,
Fig. 2 eine Prinzipdarstellung einer Vorrichtung zum Empfangen und Versenden von Car2X-Informationen in dem Fahrzeug der Fig. 1,
Fig. 3 eine Prinzipdarstellung einer alternativen Vorrichtung zum Empfangen und Versenden von Car2X-Informationen in dem Fahrzeug der Fig. 1,
Fig. 4 eine Prinzipdarstellung einer Vorrichtung zur Erzeugung eines Steuersignals zur Steuerung der Vorrichtungen gemäß Fig. 3 oder 4 zeigen.

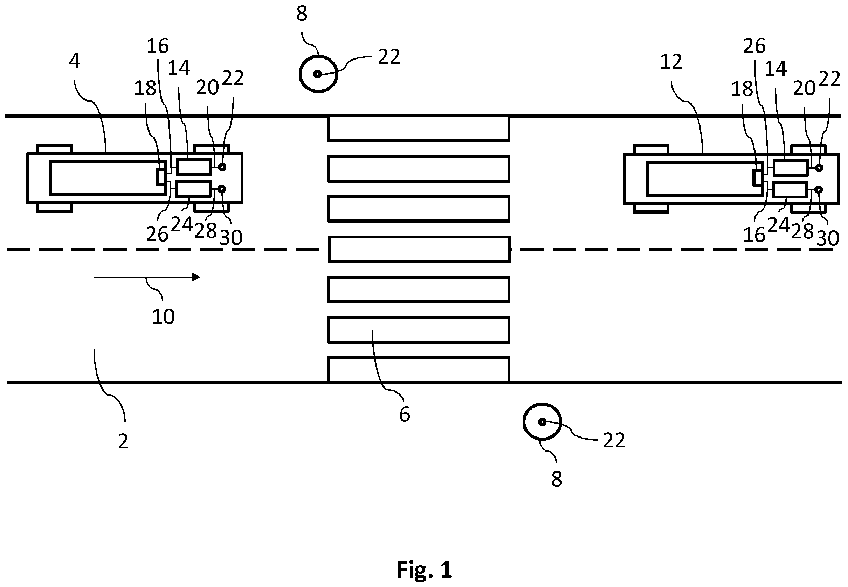

Es wird auf Fig. 1 Bezug genommen, die eine Prinzipdarstellung eines auf einer Straße 2 fahrenden Fahrzeuges 4 zeigt.

In der vorliegenden Ausführung soll sich auf der Straße 2 eine Fußgängerüberführung 6 befinden, an der mittels einer Ampel 8 geregelt wird, ob das Fahrzeug 4 auf der Straße 2 die Fußgängerüberführung 6 überqueren darf oder ein nicht weiter dargestellter Fußgänger auf der Fußgängerüberführung 6 die Straße 2.

In einer Fahrtrichtung 10 vor dem Fahrzeug 4 ist in Fig. 1 ein weiteres Fahrzeug 12 dargestellt, das sich in die gleiche Fahrtrichtung 10 bewegt, in die sich auch das Fahrzeug 4 bewegt.

Das Fahrzeug 4 weist in der vorliegenden Ausführung einen Empfänger 14 für ein globales Satellitennavigationssystem, nachstehend GNSS-Empfänger 14 genannt auf, über den das Fahrzeug 4 in einer an sich bekannten Weise Positionsdaten in Form seiner absoluten geographischen Lage 16 bestimmen und beispielsweise im Rahmen eines Navigationssystems 18 nutzen kann, um diese auf einer nicht weiter dargestellten geographischen Karten anzuzeigen. Entsprechende Signale 20 des Globalen Satellitennavigationssystems, nachstehend GNSS-Signale 20 genannt, können beispielsweise über eine entsprechende GNSS-Antenne 22 empfangen und in an sich bekannter Weise an den GNSS-Empfänger weitergeleitet werden.

Das Fahrzeug weist in der vorliegenden Ausführung ferner einen Transmitter 24 auf, über den das Fahrzeug mit dem weiteren Fahrzeug 12 und/oder der Ampel 8 zur einem Car2X-Netzwerk genannten Fahrzeug-Ad-hoc-Netzwerk zusammenschließen und Daten austauschen kann. Dieser Transmitter 24 soll zur Abgrenzung gegenüber dem GNSS-Empfänger 14 nachstehend Car2X-Transmitter 24 genannt werden. Als Fallbeispiel soll der Car2X-Transmitter 24 nachstehend Positionsdaten in Form einer absoluten geographischen Lage 26 vom weiteren Fahrzeug 12 empfangen, die das weitere Fahrzeug 12 in einem entsprechenden Car2X-Signal 28 in einer noch zu beschreibenden Weise überträgt. Das Car2X-Signal 28 wird im Fahrzeug 4 über eine Car2X-Antenne 30 empfangen und an den Car2X-Transmitter 24 weitergeleitet.

An dieser Stelle sei darauf hingewiesen, dass im Rahmen eines Car2X-Netzwerkes zahlreiche Informationen, nachstehend auch Nutzdaten genannt, unter den einzelnen Netzwerkteilnehmer ausgetauscht werden können, die in regionenspezifischen Standards spezifiziert sind. Die austauschbaren Nutzdaten unter anderem im Rahmen der ETSI TC ITS bei ETSI in Europa und im Rahmen der IEEE 1609 bei IEEE sowie bei SAE in den Vereinigten Staaten von Amerika standardisiert. Der Übersichtlichkeit halber soll jedoch das Fallbeispiel herangezogen werden, dass Positionsdaten übermittelt werden, die einzelnen Teilnehmer des Car2X-Netzwerkes beispielsweise auf den Navigationssystemen 18 angezeigt werden können.

Darüber hinaus ist das Fahrzeug 4 zudem eingerichtet, seine aus dem GNSS-Signal 20 abgeleitete absolute geographische Lage 16 in einem entsprechenden Car2X-Singal 28 an das weitere Fahrzeug 12 zu senden, damit dieses ebenfalls die absolute geographische Lage 16 des Fahrzeuges 4 kennt. Dementsprechend leitet das weitere Fahrzeug 12 seine absolute geographische Lage 26 aus dem GNSS-Signal 20 ab und empfängt die absolute geographische Lage 16 des Fahrzeuges 4 über das Car2X Signal 28.

Schließlich kann auch die Ampel 8 eingerichtet sein, ihre absolute geographische Lage über eine Car2X-Antenne 22 in einer nicht weiter dargestellten Weise zu senden. Zwar könnte die absolute geographische Lage der Ampel 8 über ein zuvor genanntes GNSS-System bestimmt werden, da sich die Ampel 8 jedoch nicht bewegt, kann ihre absolute geographische Lage einmal fest bestimmt und beispielsweise in einem internen Speicher der Ampel 8 fest hinterlegt werden, so dass auf ein eigenes kostenintensives GNSS-System verzichtet werden kann.

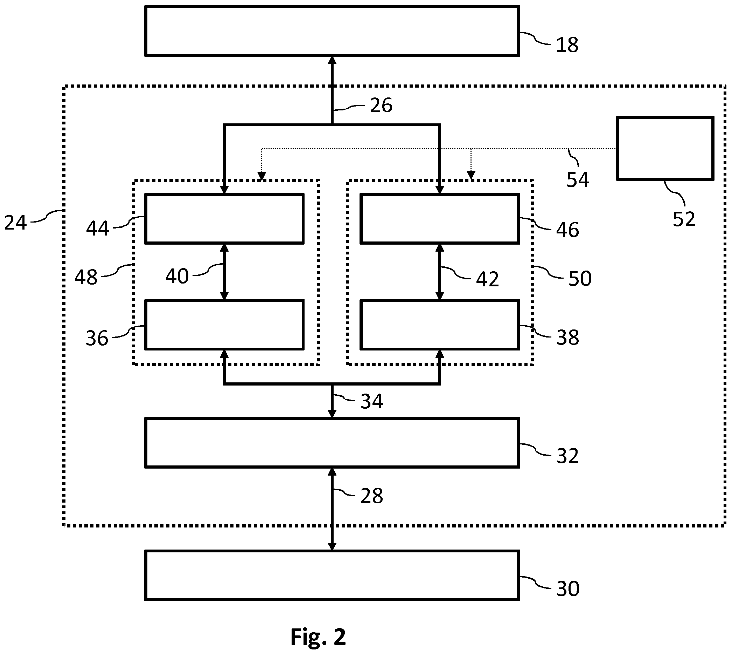

Wie weiter oben bereits ausgeführt, ist der Austausch der Nutzdaten, also der Positionsdaten im vorliegenden Beispiel, regionenspezifisch standardisiert, weil beispielsweise in US-Amerika an anderes Kommunikationsprotokoll verwendet wird, als in Europa. Daher müsste der Car2X-Transmitter 24 eigentlich an die Region angepasst werden, in der er verwendet werden soll. Um dies jedoch zu vermeiden, wird vorgeschlagen, den Car2X-Transmitter 24 in der nachstehend anhand von Fig. 2 erläuterten Weise auszubilden.

Der Car2X-Transmitter 24 ist im vorliegenden Ausführungsbeispiel als Recheneinrichtung ausgebildet, auf der verschiedene Programme zum Empfangen und Versenden der Positionsdaten 26 mittels des Car2X-Signals 28 ablaufen.

Wenn ein Car2X-Signal 28 über die Antenne 30 empfangen werden soll, wird es in einem vorbereitenden Programmteil 32 demoduliert, gefiltert und in einen Datenstrom 34 gewandelt, der von einem der zuvor genannten Kommunikationsprotokolle verstanden wird und in die zu übertragenden Positionsdaten 26 umgewandelt werden kann.

Der Datenstrom 34 wird nun an zwei verschiedene Kommunikationsschnittstellen 36, 38 weitergeleitet. Während die erste Kommunikationsschnittstelle 36 eingerichtet ist, den Datenstrom 34 gemäß dem Kommunikationsprotokoll nach dem ETSI TC IST-Standard zu entschlüsseln, ist die zweite Kommunikationsschnittstelle 38 eingerichtet, den Datenstrom 34 gemäß dem Kommunikationsprotokoll nach dem IEEE 1609-Standard zu entschlüsseln. Beide Kommunikationsschnittstellen 36, 38 geben entsprechend einen ersten protokollspezifischen Nutzdatenstrom 40 und einen zweiten protokollspezifischen Nutzdatenstrom 42 aus, die jeweils die Positionsdaten 26 gemäß dem jeweiligen Standard beschreiben.

Um den ersten protokollspezifischen Nutzdatenstrom 40 und den zweiten protokollspezifischen Nutzdatenstrom 42 und damit die Positionsdaten 26 für das Navigationssystem 18 in einer allgemein verständlichen Standardform bereitzustellen, sind im Rahmen der vorliegenden Ausführung Konvertierungseinheiten 44, 46 vorgesehen, die die protokollspezifischen Nutzdatenströme 40, 42 in die allgemein verständliche Standardform umwandeln und dann an das Navigationssystem 18 bereitstellen. Auf diese Weise braucht das Navigationssystem 18 nicht spezifisch für ein bestimmtes Kommunikationsprotokoll ausgelegt werden.

Wenn umgekehrt die Positionsdaten 26 umgekehrt im Car2X-Signal 28 über die Antenne 30 gesendet werden sollen läuft der zuvor beschriebene Datenfluss in umgekehrter Richtung, worauf der Übersichtlichkeit halber nicht weiter eingegangen werden soll.

Zweckmäßigerweise wird während des Betriebs des Car2X-Transmitters 24 nur eine der beiden Kommunikationsschnittstellen 36, 38 aktiviert. Hierzu sind die beiden Kommunikationsschnittstellen 36, 38 zusammen mit den jeweiligen Konvertierungseinheiten 44, 46 in je einer eigenen Partition 48, 50 des Car2X-Transmitters 24 als Programm hinterlegt, wobei jede Partition 48, 50 durch eine noch zu beschreibende Aktivierungseinrichtung 52 mit einem Steuersignal 54 aktiviert werden kann. Alternativ können die Kommunikationsschnittstellen 36, 38 und die Konvertierungseinheiten 44, 46 auch jeweils in getrennten Tasks oder Prozessen realisiert werden, wobei diese dann mit entsprechenden Mitteln, wie Befehlen oder Nachrichten aktiviert oder deaktiviert werden können.

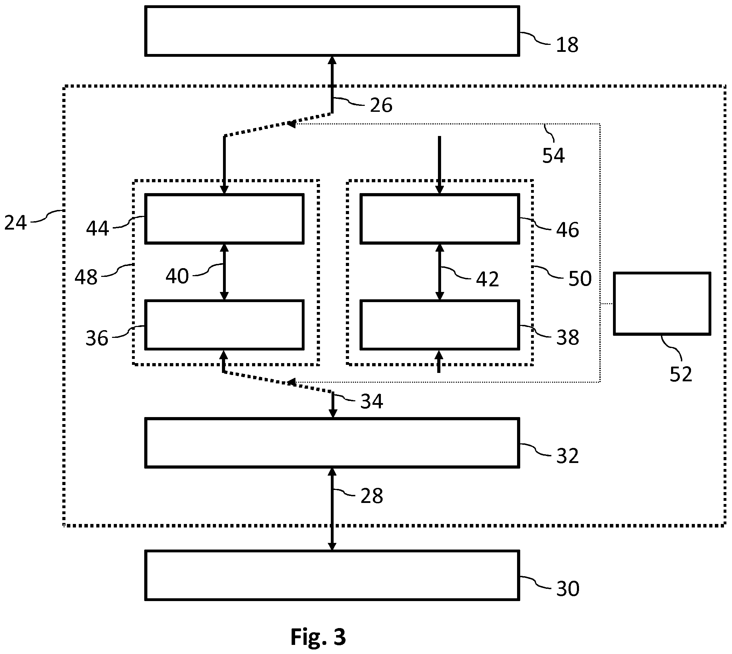

Statt die einzelnen Partitionen 48, 50 zu aktivieren, kann die Aktivierungseinrichtung 52 mit dem Steuersignal 54 wie in Fig. 3 gezeigt, auch den Datenfluss steuern. Dabei kann die Partition 48, 50 mit der nicht verwendeten Kommunikationsschnittstelle 36, 38 optional deaktiviert werden.

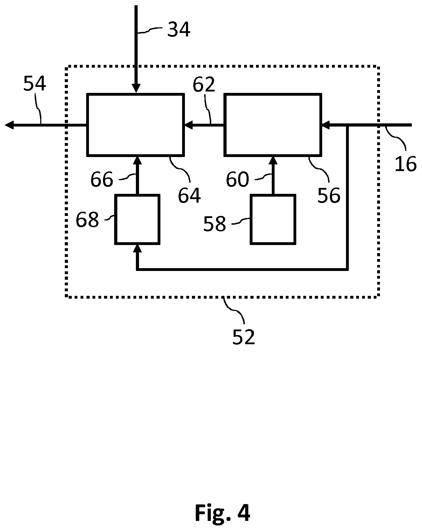

Es wird auf Fig. 4 Bezug genommen, anhand derer die Funktionsweise der Aktivierungseinrichtung 52 näher erläutert werden soll.

Die Aktivierungseinrichtung 52 umfasst einen Erkennungsabschnitt 56 dem die oben genannte absolute geographische Lage 16 des Fahrzeuges 2 zugeführt wird. Ferner umfasst die Aktivierungseinrichtung 52 einen Bereichsspeicher 58, in denen potentielle geographische Aufenthaltsbereiche 60 für das Fahrzeug gespeichert sind. Diese Aufenthaltsbereiche 60 können beispielsweise Europa oder US-Amerika sein. Jeder potentielle geographische Aufenthaltsbereich 60 wird durch bekannte Merkmale beschrieben, deren Existenz im Erkennungsabschnitt 56 abgefragt wird. Im Rahmen der vorliegenden Ausführung sind diese Merkmale die absoluten geographischen Lagen, die von den jeweiligen potentiellen geographischen Aufenthaltsbereichen 60 eingegrenzt werden. Damit prüft der Erkennungsabschnitt 56, ob die über den GNSS-Empfänger 14 empfangene absolute geographische Lage 16 in eine der potentiellen geographischen Aufenthaltsbereiche 60 fällt. Fällt die absolute geografische Lage 16 in einen 62 der potentiellen Aufenthaltsbereiche 60, gibt der Erkennungsabschnitt 56 diesen speziellen geographischen Aufenthaltsbereich 62, in dem sich das Fahrzeug 4 befindet als Ergebnis aus.

Der erkannte spezielle geographische Aufenthaltsbereich 62 wird danach in einem Plausibilisierungsabschnitt 64 noch einmal überprüft. Dazu empfängt der Plausibilisierungsabschnitt 64 den oben genannten Datenstrom 34 und überprüft diesen auf seine Form. Beispielsweise könnte der Datenstrom 34 in einem der potentiellen geographischen Aufenthaltsbereich 60 eine bestimmte Form aufweisen, weil er die Nutzdaten als TDMA-Kanal trägt. Um die Sicherheit weiter zu steigern, kann der Plausibilisierungsabschnitt 64 den erkannten geographischen Aufenthaltsbereich 62 auch basierend auf der zuletzt erfassten absolute geografische Lage 66 plausibilisieren, die beispielsweise in einem Zwischenspeicher 68 zwischengespeichert werden kann. Es gibt weitere zahlreiche Plausibilisierungsmöglichkeiten, auf die der Kürze halber aber nicht weiter eingegangen werden soll.

Fällt die Plausibilisierung positiv aus, dann erzeugt der Plausibilisierungsabschnitt 64 das Steuersignal 54 entsprechend dem erkannten speziellen geographischen Aufenthaltsbereich 62.

## Patentansprüche

1. Verfahren zum Bereitstellen von Daten (26), die mit einem Fahrzeug (4) in einem Fahrzeug-Ad-hoc-Netzwerk, in dem die Daten (26) mit einem ortsabhängigen Kommunikationsprotokoll (36, 38) zur Entschlüsselung eines empfangenen Datenstroms (34) und Ausgabe eines protokollspezifischen Nutzdatenstroms zwischen am Fahrzeug-Ad-hoc-Netzwerk teilnehmenden Netzwerkteilnehmern (8, 12) übertragen werden, empfangbar sind, wobei mittels einer Recheneinrichtung die Schritte ausgeführt werden:
- Identifizieren (56, 64) eines geographischen Aufenthaltsbereiches (62) des Fahrzeuges (4),
- Auswählen (54) eines für den identifizierten Aufenthaltsbereich (62) geeigneten ortsabhängigen Kommunikationsprotokolls (36, 38),
- Empfangen der Daten (26) durch Entschlüsselung des Datenstroms (34) mit dem ausgewählten Kommunikationsprotoll (36, 38), so dass die empfangenen Daten (26) wenigstens einer über dem ausgewählten Kommunikationsprotokoll (36, 38) liegenden Netzwerkschicht (18) zur Verfügung stehen, und
- Konvertieren (44, 46) der zwischen dem ausgewählten Kommunikationsprotokoll (36, 38) und der über dem ausgewählten Kommunikationsprotokoll (36, 38) liegenden Netzwerkschicht (18) übergebenen Daten (26),
wobei zum Identifizieren (56, 64) des geographischen Aufenthaltsbereichs (62) des Fahrzeuges (4) der geographische Aufenthaltsbereich (62) erkannt (56) wird und der erkannte geographische Aufenthaltsbereich (62) plausibilisiert (64) wird und wobei der Schritt des Auswählens (54) bei einer positiven Plausibilisierung durchgeführt wird, wobei die Plausibilisierung (64) des erkannten geographischen Aufenthaltsbereich (62) basiert auf:
- einem dem erkannten geographischen Aufenthaltsbereich (63) zuordenbaren Mobilfunksystem, und/oder
- einem Vergleich zwischen einem zuvor abgespeicherten geographischen Aufenthaltsbereich (66) und dem erkannten geographischen Aufenthaltsbereich (62), und/oder
- einem Vergleich zwischen einer aktuellen Fahrzeugkonfiguration und einer dem erkannten geographischen Aufenthaltsbereich (62) zugeordneten Fahrzeugkonfiguration, und/oder
- einer dem erkannten geographischen Aufenthaltsbereich (62) zuordenbare Struktur von mit dem Kommunikationsprotokoll (36, 38) empfangbaren Daten (34) erfolgt.

2. Verfahren nach Anspruch 1, wobei zum Erkennen (56) des Aufenthaltsbereichs (62) des Fahrzeuges (4) geprüft wird, ob zu vorbekannten Aufenthaltsbereichen (60) bekannte Merkmale (16) vorhanden sind.

3. Verfahren nach Anspruch 2, wobei das bekannte Merkmal (16) eine dem vorbekannten geographischen Aufenthaltsbereich (60) zuordenbare und über ein globales Satellitennavigationssystem empfangene geographische Position (16) ist.

4. Steuervorrichtung (24), die eingerichtet ist, ein Verfahren nach einem der vorstehenden Ansprüche durchzuführen.

5. Fahrzeug (4) umfassend eine Steuervorrichtung (24) nach Anspruch 4.

## Claims

1. Method for providing data (26) that are receivable with a vehicle (4) in a vehicle ad-hoc network in which the data (26) are transmitted using a location-dependent communication protocol (36, 38) for decrypting a received data stream (34) and outputting a protocol-specific user data stream between network subscribers (8, 12) using the vehicle ad-hoc network, wherein a computing device is used to carry out the steps of:
- identifying (56, 64) a geographical location area (62) of the vehicle (4),
- selecting (54) a location-dependent communication protocol (36, 38) suitable for the identified location area (62),
- receiving the data (26) by decrypting the data stream (34) using the selected communication protocol (36, 38), so that the received data (26) are available to at least one network layer (18) situated above the selected communication protocol (36, 38), and
- converting (44, 46) the data (26) transferred between the selected communication protocol (36, 38) and the network layer (18) situated above the selected communication protocol (36, 38),
wherein identification (56, 64) of the geographical location area (62) of the vehicle (4) involves the geographical location area (62) being recognized (56) and the recognized geographical location area (62) being plausibility-checked (64) and wherein the selection step (54) is performed if the plausibility check is positive, the plausibility check (64) on the recognized geographical location area (62) being based on:
- a mobile radio system that is associable with the recognized geographical location area (63), and/or
- a comparison between a previously stored geographical location area (66) and the recognized geographical location area (62), and/or
- a comparison between a current vehicle configuration and a vehicle configuration associated with the recognized geographical location area (62), and/or
- a structure, of data (34) receivable using the communication protocol (36, 38), that is associable with the recognized geographical location area (62).

2. Method according to Claim 1, wherein recognition (56) of the location area (62) of the vehicle (4) involves the performance of a check to determine whether known features (16) are available for previously known location areas (60).

3. Method according to Claim 2, wherein the known feature (16) is a geographical position (16) that is associable with the previously known geographical location area (60) and received via a global satellite navigation system.

4. Control device (24), configured to perform a method according to one of the preceding claims.

5. Vehicle (4) comprising a control device (24) according to Claim 4.

## Revendications

1. Procédé de mise à disposition de données (26), qui peuvent être reçues avec un véhicule (4) dans un réseau ad hoc de véhicule, dans lequel les données (26) sont transmises avec un protocole de communication (36, 38) dépendant du lieu pour le décryptage d'un flux de données (34) reçu et la délivrance en sortie d'un flux de données utiles spécifique au protocole entre des membres du réseau (8, 12) qui participent au réseau ad hoc de véhicule, les étapes suivantes étant exécutées au moyen d'un dispositif de calcul :
- identification (56, 64) d'une zone de séjour (62) géographique du véhicule (4),
- sélection (54) d'un protocole de communication (36, 38) dépendant du lieu approprié pour la zone de séjour (62) identifiée,
- réception des données (26) par décryptage du flux de données (34) avec le protocole de communication (36, 38) sélectionné, de sorte que les données (26) reçues soient disponibles pour au moins une couche de réseau (18) située au-dessus du protocole de communication (36, 38) sélectionné, et
- conversion (44, 46) des données (26) transférées entre le protocole de communication (36, 38) sélectionné et la couche de réseau (18) située au-dessus du protocole de communication (36, 38) sélectionné,
en vue d'identifier (56, 64) la zone de séjour (62) géographique du véhicule (4), la zone de séjour (62) géographique étant reconnue (56) et la plausibilité de la zone de séjour (62) géographique détectée étant déterminée (64), et l'étape de sélection (54) étant exécutée dans le cas d'une plausibilité positive, la détermination de la plausibilité (64) de la zone de séjour (62) géographique détectée étant basée sur :
- un système de radiocommunication mobile pouvant être associé à la zone de séjour (63) géographique détectée, et/ou
- une comparaison entre une zone de séjour (66) géographique mémorisée précédemment et la zone de séjour (62) géographique reconnue, et/ou
- une comparaison entre une configuration de véhicule actuelle et une configuration de véhicule associée à la zone de localisation (62) géographique reconnue, et/ou
- une structure des données (34) pouvant être reçues avec le protocole de communication (36, 38) et pouvant être associée à la zone de séjour (62) géographique reconnue.

2. Procédé selon la revendication 1, un contrôle étant effectué, en vue de reconnaître (56) la zone de séjour (62) du véhicule (4), afin de vérifier s'il existe des caractéristiques (16) connues pour des zones de séjour (60) connues au préalable.

3. Procédé selon la revendication 2, la caractéristique connue (16) étant une position géographique (16) pouvant être associée à la zone de séjour (60) géographique préalablement connue et reçue par le biais d'un système mondial de navigation par satellite.

4. Arrangement de commande (24), qui est conçu pour mettre en oeuvre un procédé selon l'une des revendications précédentes.

5. Véhicule (4), comprenant un arrangement de commande (24) selon la revendication 4.
